# FASCICULE DE BREVET EUROPEEN

(11) **EP 3 313 353 B1**
(45) Date de publication et mention de la délivrance du brevet: **01.05.2019**
(21) Numéro de dépôt: 16733396.2
(22) Date de dépôt: 23.06.2016
(51) Int. Cl.: A61J 3/06, A61J 3/08, B29C 47/00, B29C 47/40, B30B 11/24

(54) **LIGNE DE PRODUCTION POUR LA PRODUCTION DE MÉDICAMENTS, ET INSTALLATION DE PRODUCTION COMPRENANT UNE TELLE LIGNE DE PRODUCTION**
FERTIGUNGSSTRASSE ZUR HERSTELLUNG VON ARZNEIMITTELN UND PRODUKTIONSANLAGE MIT SOLCH EINER FERTIGUNGSSTRASSE
PRODUCTION LINE FOR THE PRODUCTION OF MEDICINAL PRODUCTS AND PRODUCTION PLANT COMPRISING SUCH A PRODUCTION LINE

(30) Priorité: 23.06.2015 FR 1555783
(43) Date de publication de la demande: 02.05.2018
(73) Titulaire: Rondol Industrie, 67000 Strasbourg (FR)
(72) Inventeur: DE MARGERIE, Victoire, 67000 Strasbourg (FR); BRUGGEMAN, Donatien, 67000 Strasbourg (FR); MAYER, Hans, 67000 Strasbourg (FR)
(74) Mandataire: Lavoix
(86) Numéro de dépôt international: PCT/EP2016/064539
(87) Numéro de publication internationale: WO 2016/207279

(56) Documents cités:
- EP-A1- 2 198 856
- CN-U- 201 676 290
- US-A- 4 092 089
- US-A1- 2015 158 228

## Description

La présente invention concerne une ligne de production pour la production de médicaments comprenant au moins un principe actif, la ligne de production étant du type comprenant une extrudeuse, pour la production d'un extrudat à partir du principe actif et d'au moins un excipient destiné à former une matrice d'encapsulation du principe actif, et un organe de refroidissement de l'extrudat en sortie de l'extrudeuse, l'extrudeuse comprenant un fourreau et au moins deux vis parallèles logées dans le fourreau et s'interpénétrant l'une l'autre pour le mélange du ou de chaque principe actif avec le ou chaque excipient.

Des lignes de production du type précité sont connues. Elles permettent de produire des médicaments sous forme de granulés, à coûts réduits. Elles permettent en outre d'améliorer l'efficacité thérapeutique des médicaments et d'allonger leur durée de conservation.

Un problème toutefois rencontré dans l'utilisation des lignes de production du type précité est la fragilité des principes actifs, certains étant susceptibles de se dégrader rapidement à des températures modérément élevées de l'ordre de 60°C. Les premières lignes de production à extrusion utilisées pour la production de médicaments n'étaient ainsi adaptées qu'à la production de médicaments employant les principes actifs les moins fragiles.

La Demanderesse propose, depuis le début des années 2010, des lignes de production à extrusion permettant de produire des médicaments à base des principes actifs les plus fragiles. Ces lignes de production, aux dimensions réduites par rapport aux lignes de production utilisées précédemment, permettent d'utiliser des dosages de principes actifs plus faibles et fournissent un contrôle renforcé de la température du mélange au cours de l'extrusion.

Les lignes de production existantes ne donnent toutefois pas entière satisfaction. En effet, ces lignes de production doivent être utilisées dans des salles propres au sens des normes ISO 14644 (plus communément connues sous l'appellation « salles blanches »), de façon à éviter la contamination des médicaments produits. Or ces salles propres coûtent très cher à construire et à entretenir, et les lignes de production existantes occupent généralement une surface au sol importante dans lesdites salles propres, les plus compactes d'entre elles occupant encore une surface de 2m². Cette surface de salle propre occupée par les lignes de production représente ainsi un surcoût important pour ces lignes de production.

Par ailleurs, les allers et retours d'opérateurs pour la manipulation des lignes de production installées en salle propre, en particulier pour charger ces lignes de production en principe actif et en excipient et pour piloter lesdites lignes de production, accroît les risques de contamination de la salle propre. Il est dès lors nécessaire de renforcer les protocoles de décontamination de la salle propre, ce qui augmente son coût, sous peine d'avoir un risque accru de contamination des médicaments produits.

Un objectif de l'invention est de réduire les coûts associés à l'utilisation de lignes de production du type précité en salle propre. D'autres objectifs sont de réduire l'espace au sol occupé par ces lignes de production en salle propre, et de limiter les interventions humaines devant être pratiquées sur lesdites lignes de production en salle propre.

A cet effet, l'invention a pour objet une ligne de production du type précité, dans laquelle le fourreau est orienté sensiblement verticalement et la surface au sol occupée par la ligne de production est inférieure à 0,5 m².

Selon des modes de réalisation particuliers de l'invention, la ligne de production présente également l'une ou plusieurs des caractéristiques suivantes, prise(s) isolément ou suivant toute(s) combinaison(s) techniquement possible(s) :
- la ligne de production comprend un terminal de commande distant pour le pilotage de l'extrudeuse et un dispositif de communication sans fil pour l'échange de données entre l'extrudeuse et le terminal de commande ;
- l'organe de refroidissement comporte une gaine définissant un passage pour l'extrudat et présentant au moins un canal de guidage d'un fluide de refroidissement autour du passage ;
- l'organe de refroidissement est disposé en-dessous du fourreau ;
- le passage est orienté sensiblement verticalement ;
- la ligne de production comprend un bâti supportant l'extrudeuse et un mécanisme de déplacement pour le déplacement du fourreau relativement au bâti suivant une direction sensiblement verticale ; et
- la ou chaque vis est allongée suivant un axe propre, l'extrudeuse comprend un dispositif d'entraînement pour entraîner la ou chaque vis en rotation autour de son axe, et le dispositif d'entraînement et la ou chaque vis comprennent des organes de coopération complémentaires pour la fixation réversible de la ou chaque vis au dispositif d'entraînement, lesdits organes de coopération étant adaptés pour empêcher, lorsque la ou chaque vis est fixée, la translation de ladite vis suivant son axe relativement au fourreau.

L'invention a également pour objet une installation de production de médicaments comprenant au moins un principe actif, ladite installation comprenant une salle propre dans laquelle sont produits les médicaments et une ligne de production telle que définie ci-dessus pour la production desdits médicaments, l'extrudeuse étant placée dans la salle propre.

Selon des modes de réalisation particuliers de l'invention, l'installation de production présente également l'une ou plusieurs des caractéristiques suivantes, prise(s) isolément ou suivant toute(s) combinaison(s) techniquement possible(s) :
- l'installation de production comprend un dispositif d'alimentation pour l'alimentation de l'extrudeuse avec un mélange pulvérulent comprenant le ou chaque principe actif et le ou chaque excipient, ledit dispositif d'alimentation comprenant une ouverture pour la réception du mélange pulvérulent placée hors de la salle propre ; et
- l'installation de production comprend un système de commande pour le pilotage de la ligne de production, ledit système de commande étant placé hors de la salle propre.

D'autres caractéristiques et avantages apparaîtront à la lecture de la description qui va suivre, donnée uniquement à titre d'exemple et faite en se référant aux dessins annexés, dans lesquels :
- la Figure 1 est une vue en perspective d'une installation de production selon l'invention,
- la Figure 2 est une vue en coupe partielle, de face, d'une ligne de production de l'installation de production de la Figure 1, selon une première variante de l'invention,
- la Figure 3 est une vue d'un détail marqué III sur la Figure 2,
- la Figure 4 est une vue de côté de la ligne de production de l'installation de production de la Figure 1, selon une deuxième variante de l'invention,
- la Figure 5 est vue de face d'une partie de la ligne de production de la Figure 4, et
- la Figure 6 est une vue schématique d'une armoire électrique abritant une partie d'un système de commande de l'installation de production de la Figure 1.

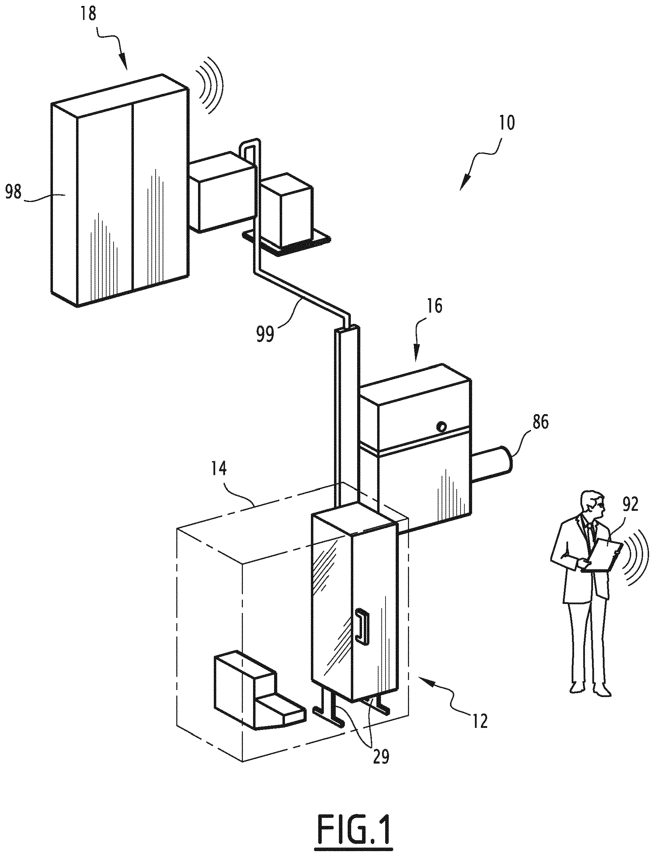

L'installation de production 10 représentée sur la Figure 1 est une installation de production de médicaments (non représentés) comprenant au moins un principe actif (non représenté). Elle comprend une ligne de production 12, placée dans une salle propre 14 telle que définie au sens des normes ISO 14644, un dispositif d'alimentation 16 pour l'alimentation de la ligne de production 12 avec un mélange pulvérulent comprenant le ou chaque principe actif, et un système de commande 18 pour le pilotage de l'installation de production 10.

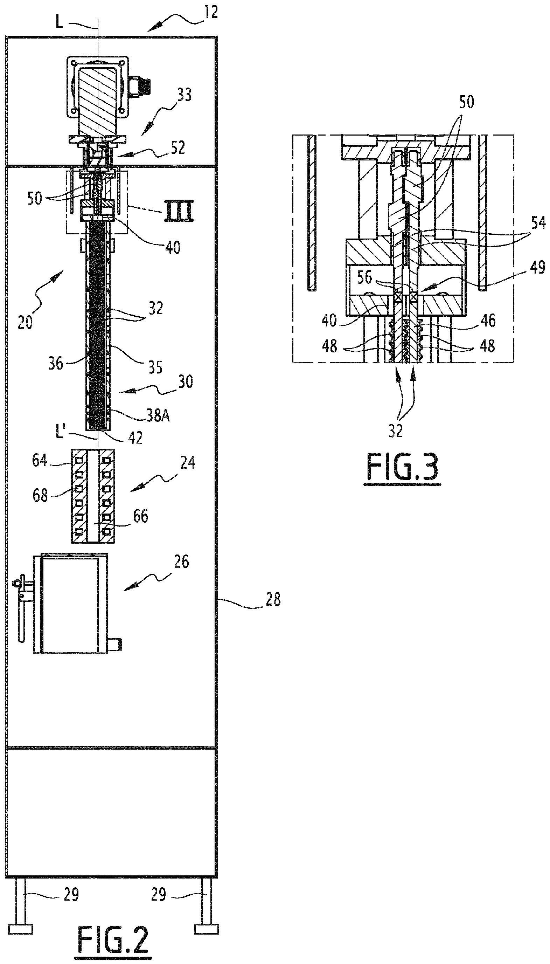

En référence à la Figure 2, la ligne de production 12 comprend une extrudeuse 20 pour la production d'un extrudat (non représenté) à partir du principe actif et d'au moins un excipient (non représenté) destiné à former une matrice d'encapsulation du principe actif, un organe de refroidissement 24 pour refroidir l'extrudat en sortie de l'extrudeuse, un dispositif de coupe 26 pour découper l'extrudat après son refroidissement, et un bâti 28 supportant l'extrudeuse 20, l'organe de refroidissement 24 et le dispositif de coupe 26.

Le bâti 28 comprend des pieds 29 définissant ensemble une surface de contact avec un sol (non représenté). On définit cette surface de contact comme étant une surface horizontale, et on définit toute direction verticale comme étant une direction perpendiculaire à ladite surface de contact. En variante (non représentée), le bâti 28 ne comprend pas de pied, et la surface de contact avec le sol est alors définie par un fond du bâti 28.

L'extrudeuse 20 comprend un fourreau 30, au moins deux vis 32 logées dans le fourreau 30, un dispositif 33 d'entraînement de chaque vis 32 en rotation autour de son axe, et un système (non représenté) de régulation de la température du fourreau 30. Dans l'exemple représenté, l'extrudeuse 20 est une extrudeuse bi-vis, de sorte que les vis 32 sont au nombre de deux et s'interpénètrent l'une l'autre.

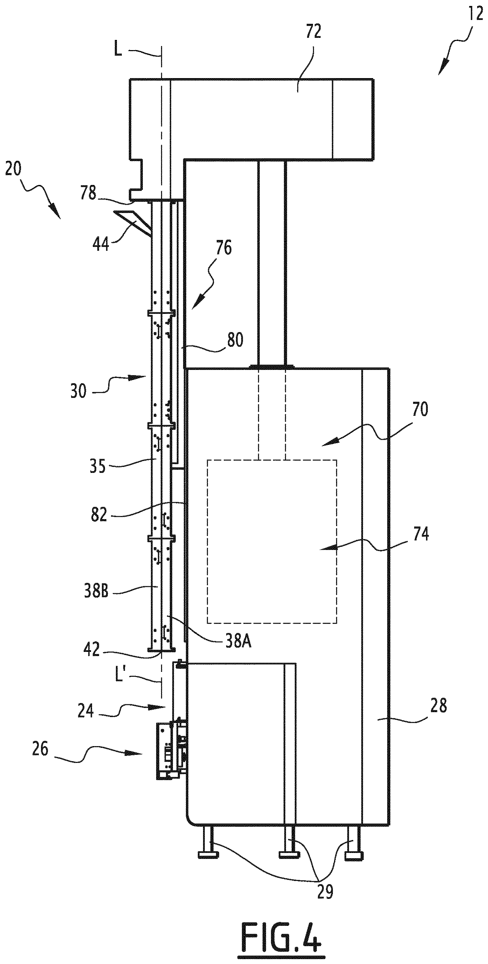

Le fourreau 30 comprend une paroi 35 entourant un espace 36 de réception des vis 32. Cette paroi 35 définit des orifices borgnes (non représentés) destinés à recevoir des sondes de température (non représentées) et des canaux internes (non représentés) pour la circulation d'un fluide de refroidissement. La paroi 35 est formée de deux demi-coques 38A, 38B (Figure 4) déplaçables l'une par rapport à l'autre pour libérer l'accès à l'espace de réception 36.

Le fourreau 30 est allongé suivant une direction longitudinale L-L'. Selon l'invention, cette direction longitudinale L-L' est orientée sensiblement verticalement. Par « orientée sensiblement verticalement », on comprend que l'angle que forme la direction longitudinale L-L' avec la verticale est inférieur à 15°, de préférence inférieur à 5°.

Le fourreau 30 présente à chacune de ses extrémités longitudinales une ouverture 40, 42 faisant communiquer l'espace de réception 36 avec l'extérieur du fourreau 30. L'ouverture supérieure 40 constitue une ouverture de passage des vis 32. L'ouverture inférieure 42 constitue une ouverture de sortie de l'extrudat ; elle présente de préférence une conformation particulière en fonction de la section que l'on souhaite conférer à l'extrudat.

La paroi 35 définit également une fenêtre d'alimentation (non représentée) débouchant dans l'espace de réception 36 et à l'extérieur du fourreau 30 pour l'alimentation de l'espace de réception 36 en mélange pulvérulent. Cette fenêtre d'alimentation est positionnée à proximité de l'ouverture supérieure 40. Elle est de préférence disposée à la base d'une trémie 44 (Figure 4).

Chaque vis 32 est allongée suivant un axe propre orienté sensiblement parallèlement à la direction longitudinale L-L' du fourreau 30. Les vis 32 sont ainsi parallèles l'une à l'autre. Cela permet de facilement changer l'échelle de l'extrudeuse 20 en augmentant ou en diminuant le diamètre des vis 32 sans devoir revoir la conception de l'extrudeuse 20.

Dans l'exemple représenté, chaque vis 32 comprend une tige 46 et une pluralité d'élément de vis 48 montés sur la tige 46 (Figure 3).

La tige 46 s'étend suivant l'axe de la vis 32.

Chaque élément de vis 48 a une forme générale cylindrique et présente un filetage extérieur et un orifice axial intérieur. L'orifice axial présente une section radiale complémentaire de celle de la tige 46, de manière à immobiliser l'élément de vis 48 en rotation relativement à la tige 46 tout en permettant la translation de l'élément de vis 48 par rapport à la tige 46 suivant l'axe de la vis 32.

De préférence, la tige 46 présente à l'une de ses extrémités une butée (non représentée) pour les éléments de vis 48. La tige 46 présente également à son extrémité opposée un organe 49 de coopération avec le dispositif d'entraînement 33.

En variante, chaque vis 32 est formée d'une seule pièce.

Chaque vis 32 a un diamètre D tel que l'égalité suivante est respectée : L/D = 40, où L est la longueur du fourreau 30, prise suivant sa direction longitudinale L-L'.

Dans le premier mode de réalisation, ce diamètre D est compris entre 10 et 11 mm. Dans le deuxième mode de réalisation, ce diamètre D est compris entre 39 et 41 mm.

De retour à la Figure 2, le dispositif d'entraînement 33 comprend, de façon classique, un arbre d'accouplement 50 respectif pour chaque vis 32 (c'est-à-dire, dans l'exemple représenté, deux arbres d'accouplement 50) et un motoréducteur 52 pour l'entraînement de chaque arbre d'accouplement 50 en rotation autour de son axe. Chaque arbre d'accouplement 50 comprend un organe de coopération 54 (Figure 3) complémentaire de l'organe de coopération 49 porté par les vis 32 de manière à permettre l'accouplement de chaque vis 32 à son arbre d'accouplement 50 respectif.

Selon l'invention, les organes de coopération 49, 54 de chaque vis 32 et de son arbre d'accouplement 50 respectif permettent la fixation réversible de la vis 32 à l'arbre d'accouplement 50 et sont adaptés pour empêcher, lorsque la vis 32 est fixée, la translation de ladite vis 32 suivant son axe relativement au fourreau 30.

A cet effet, les organes de coopération 49, 54 comprennent, dans l'exemple représenté, un aimant 56 porté l'un des organes de coopération 49, 54. En variante (non représentée), les organes de coopération 49, 54 comprennent l'un une tige filetée et l'autre un orifice taraudé.

Le système de régulation de la température du fourreau 30 comprend une pluralité de dispositifs de chauffage, un circuit électrique d'alimentation des organes de chauffage en électricité, un circuit de circulation d'un fluide de refroidissement du fourreau 30, et une pluralité de sondes de mesure de la température du fourreau 30.

Chaque dispositif de chauffage est typiquement formé par une résistance chauffante disposée à proximité du fourreau 30. De préférence, chaque dispositif de chauffage est associé un tronçon respectif du fourreau 30 chauffé par ledit dispositif de chauffage. Il est ainsi possible de chauffer indépendamment chaque tronçon du fourreau 30.

Le circuit de circulation du fluide de refroidissement comprend les canaux formés dans la paroi 35 du fourreau 30, un circuit d'alimentation desdits canaux en fluide de refroidissement, et des vannes de régulation du débit de fluide dans chaque canal.

Chaque sonde de température est reçue dans un orifice borgne respectif de la paroi 35 du fourreau 30 et est typiquement constituée par un thermocouple.

L'organe de refroidissement 24 est disposé en-dessous du fourreau 30, en particulier en-dessous de l'ouverture inférieure 42 du fourreau 30.

L'organe de refroidissement 24 comporte une gaine 64 définissant un passage 66 pour l'extrudat. La gaine 64 présente des canaux 68 pour la circulation d'un fluide de refroidissement autour du passage 66, et le passage 66 est orienté sensiblement verticalement. Par « orienté sensiblement verticalement », on comprend que l'angle que forme l'axe du passage 66 avec la verticale est inférieur à 15°, de préférence inférieur à 5°.

Le dispositif de découpe 26 est disposé en-dessous de l'organe de refroidissement 24.

Le fourreau 30, l'organe de refroidissement 24 et le dispositif de découpe 26 sont sensiblement alignés verticalement les uns avec les autres.

Le bâti 28 a une forme générale de tour. Il porte, sur l'une de ses faces, le fourreau 30, l'organe de refroidissement 24 et le dispositif de découpe 26.

En plus des caractéristiques précédentes, qui sont communes aux premier et deuxième modes de réalisation de la ligne de production 12, la ligne de production 12 selon le deuxième mode de réalisation comprend, en référence à la Figure 4 un mécanisme de déplacement 70 pour déplacer le fourreau 30 relativement au bâti suivant une direction verticale.

Ce mécanisme de déplacement 70 comprend en particulier un logement 72 pour le dispositif d'entraînement 33 de l'extrudeuse 20, le fourreau 30 étant fixé audit logement 72, et un vérin 74 pour le déplacement vertical du logement 72 relativement au bâti 28. Le mécanisme de déplacement 70 comprend encore un organe 76 de guidage du fourreau 30 par rapport au bâti 28.

Le logement 72 est disposé au-dessus du bâti 28 et du fourreau 30. Il contient le motoréducteur 52 de l'extrudeuse 20, et les arbres d'accouplement 50. Le fourreau 30 est fixé à une face inférieure 78 du logement 72.

Le vérin 74 est de préférence un vérin vis-écrou, optionnellement un vérin électrique vis-écrou. Sa tige (non représentée) est fixe en translation suivant la direction verticale relativement au logement 72.

L'organe de guidage 76 comprend un coulisseau 80 solidaire d'un premier élément parmi le bâti 28 et le fourreau 30, et une coulisse 82 solidaire du deuxième élément parmi le bâti 28 et le fourreau 30. Dans l'exemple représenté, le coulisseau 80 est ainsi solidaire du fourreau 30, et la coulisse 82 est solidaire du bâti 28.

La coulisse 82 et le coulisseau 80 coopèrent l'un avec l'autre pour guider le déplacement du fourreau 30 relativement au bâti 28 suivant une direction sensiblement verticale. Par « direction sensiblement verticale », on comprend que l'angle que forme ladite direction avec la verticale est inférieur à 15°, de préférence inférieur à 15°.

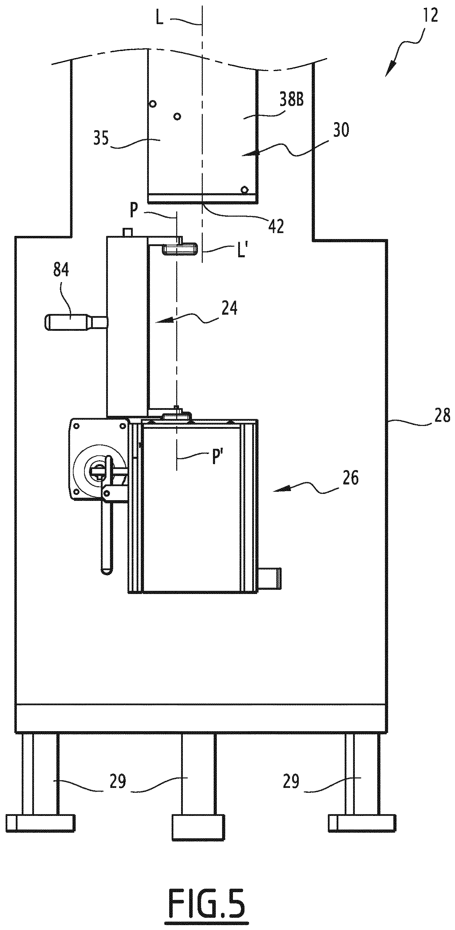

En référence à la Figure 5, l'organe de refroidissement 24 est, dans le deuxième mode de réalisation, déplaçable relativement au bâti 28 entre une position d'utilisation, dans laquelle l'organe de refroidissement 24 est sensiblement aligné verticalement avec le fourreau 30, et une position de maintenance, représentée sur la Figure 5, dans laquelle l'organe de refroidissement 24 est à l'écart, suivant une direction horizontale, du fourreau 30.

A cet effet, l'organe de refroidissement 24 est, dans l'exemple représenté, monté pivotant relativement au bâti 28 autour d'un axe de pivotement P-P', ledit axe de pivotement P-P' étant orienté sensiblement verticalement et étant espacé de l'axe du passage 66 d'une distance supérieure au demi-diamètre moyen de l'organe de refroidissement 24. Par « orienté sensiblement verticalement », on comprend que l'angle que forme l'axe de pivotement P-P' avec la verticale est inférieur à 15°, de préférence inférieur à 15°.

De préférence, comme représenté, l'organe de refroidissement 24 porte une manette 84 pour faciliter le déplacement de l'organe de refroidissement 24 par rapport au bâti 28.

De retour à la Figure 1, le dispositif d'alimentation 16 comprend une ouverture 86 pour la réception du mélange pulvérulent, et une sortie (non représentée) de distribution du mélange pulvérulent.

L'ouverture de réception 86 est placée hors de la salle propre 14.

La sortie de distribution est disposée dans la salle propre 14, au-dessus de la trémie 44 de l'extrudeuse 20.

De préférence, le dispositif d'alimentation 16 comprend également un système télécommandé (non représenté) de dosage de la quantité de mélange pulvérulent distribué à travers la sortie

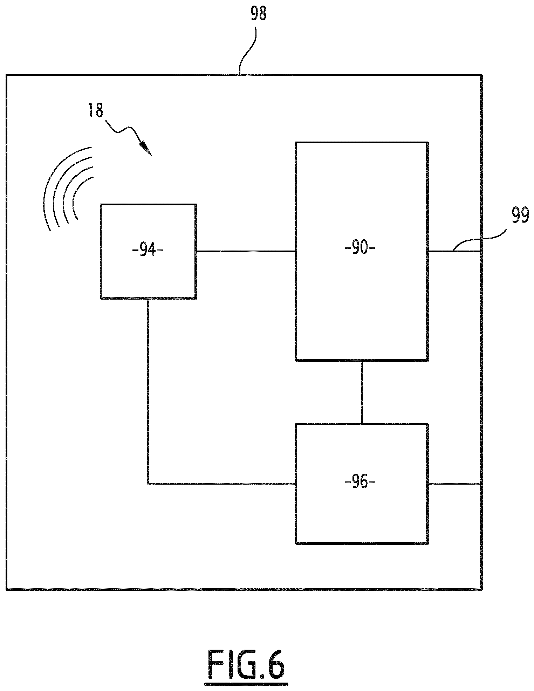

Le système de commande 18 comprend, en référence à la Figure 6, un bloc de commande 90, un terminal de commande 92 (Figure 1), un dispositif de communication sans fil 94 pour l'échange de données entre le bloc de commande 90 et le terminal de commande 92, et un organe 96 de mise en forme d'un courant électrique d'alimentation du bloc de commande 90.

Le bloc de commande 90, le dispositif de communication sans fil 92 et l'organe de mise en forme 96 sont logés dans une armoire électrique 98 placée hors de la salle propre 14. Le terminal de commande 92 est hors de l'armoire électrique 98.

Le bloc de commande 90 est programmé pour piloter le système de régulation de température de l'extrudeuse 20, le dispositif d'entraînement 33, l'organe de refroidissement 24 et le dispositif de coupe 26. A cet effet, le bloc de commande 62 est relié électriquement à la ligne de production 12 et au dispositif d'alimentation 16 par l'intermédiaire d'une ligne électrique 99.

Le bloc de commande 90 est également adapté pour convertir les données reçues par le dispositif de communication sans fil 94 en signaux de commande du motoréducteur 52, des vannes et des dispositifs de chauffage, et pour convertir les signaux reçus des sondes de températures en données interprétables par le terminal de commande 92.

Le terminal de commande 92 est de préférence constitué par un terminal mobile, typiquement une tablette tactile. Il comprend un module de communication sans fil (non représenté) compatible avec le dispositif de communication sans fil 94, et une interface homme-machine pour la présentation d'informations destinées à un opérateur et la saisie d'instructions de commande entrées par l'opérateur.

Le dispositif de communication sans fil 94 a de préférence une portée supérieure à 10 m en espace libre. A cet effet, le dispositif de communication sans fil 94 est typiquement constitué par un dispositif Wi-Fi.

Un procédé d'utilisation de l'installation de production 10 va maintenant être décrit, en référence aux Figures.

Initialement, la ligne de production 12 est propre, et aucun mélange pulvérulent n'est contenu dans le dispositif d'alimentation 16.

Un opérateur commence par entrer dans la salle propre 14 pour allumer la ligne de production 12. Il sort ensuite de la salle propre 14, et verse une quantité de mélange pulvérulent dans l'ouverture 86 du dispositif d'alimentation 16. Puis il saisit le terminal de commande 22, et entre une instruction pour lancer la production de médicament.

L'instruction entrée par l'opérateur est reçue par le dispositif de communication sans fil 92, et interprétée par le bloc de commande 90. Celui-ci envoie alors des signaux de commande au motoréducteur 52 et au système de régulation de la température du fourreau 30 pour entraîner les vis 32 en rotation autour de leurs axes et régler les températures des différents tronçons du fourreau 30 à des températures prédéterminées.

Le système de dosage du dispositif d'alimentation fait ensuite tomber dans la trémie 44 une dose prédéterminée de mélange pulvérulent. Cette dose est conduite par la trémie 44 dans le fourreau 30 où, sous l'effet du chauffage, elle est fondue, et où les composants du mélange pulvérulent 30 sont mélangés les uns aux autres grâce à l'action des vis 32 sur le mélange.

Les vis 32 entraînent le mélange vers l'ouverture inférieure 42 du fourreau 30, par laquelle il sort sous forme d'extrudat. Cet extrudat traverse ensuite le passage 66 de l'organe de refroidissement 24, où il est refroidi à la température ambiante. L'extrudat refroidi pénètre ensuite le dispositif de coupe 26, où il est découpé en bâtonnets.

La production peut être poursuivie en introduisant de nouvelles quantités de mélange pulvérulent dans l'ouverture 86 lorsque le dispositif d'alimentation 16 est vide, et en pilotant la ligne de production 12 au moyen du terminal de commande 22, sans qu'un opérateur n'entre à aucun moment dans la salle propre 14.

Lorsque la production de médicaments est terminée, l'opérateur entre à nouveau dans la salle propre 14, cette fois pour éteindre la ligne de production 12. Puis il nettoie l'extrudeuse 20.

A cet effet, l'opérateur ouvre le fourreau 30 et détache les vis 32 du dispositif d'entraînement 33. Ensuite, l'opérateur retire, pour chaque vis 32, les éléments de vis 48 de la tige 46, et nettoie individuellement les éléments de vis 48 et la tige 46. Dans le même temps, l'opérateur nettoie l'espace de réception 36. L'opérateur replace ensuite les éléments de vis 48 sur les tiges 46, rattache les vis 32 au dispositif d'entraînement 33 au moyen des organes de coopération 49, 54, et referme le fourreau 30.

Dans le deuxième mode de réalisation où, du fait de sa grande longueur, le fourreau 30 et les vis 32 sont difficiles à manipuler, l'opérateur déplace le fourreau 30 vers le bas préalablement au nettoyage de l'extrudeuse 20.

A cet effet, l'opérateur commence par déplacer l'organe de refroidissement 24 vers sa position de maintenance, de manière à dégager un espace libre à la verticale en-dessous du fourreau 30. L'opérateur actionne ensuite le dispositif de déplacement 74, de manière à faire descendre le fourreau 30 vers le bas.

Après le nettoyage de l'extrudeuse 20, l'opérateur remonte le fourreau 30 vers le haut en effectuant les opérations décrites plus haut, en sens inverse.

Grâce à l'invention décrite ci-dessus, il est possible de produire des médicaments par extrusion en ne monopolisant qu'une très petite surface au sol de salle propre. Les équipements ne nécessitant pas d'être placés dans la salle propre 14, tels que le dispositif d'alimentation 16 et le système de commande 18, étant placés hors de la salle propre 14, on gagne en effet en espace occupé dans la salle propre 14. Il est ainsi possible de limiter l'espace au sol monopolisé en salle propre à la seule surface occupée par la ligne de production 12. En outre, puisque le fourreau 30 est orienté à la verticale et non plus à l'horizontale, et puisque les éléments composant la ligne de production 12 sont disposés à la verticale les uns des autres, la surface au sol occupée par la ligne de production 12 est nettement réduite et est ainsi inférieure à 0,5 m².

De plus, les risques de contamination de la salle propre sont considérablement diminués. En effet, la production de médicaments peut se faire sans opérateur présent dans la salle propre 14, et les seules interventions d'opérateur nécessaires sur les équipements présents en salle propre sont au moment du démarrage de la ligne de production 12 et lors des opérations de nettoyage de la ligne de production 12. Alors que les entrées et sorties d'opérateurs dans la salle propre représentent normalement des risques importants de contamination de la salle propre, leur nombre est ici réduit au minimum, ce qui en conséquence limite de façon importante les risques de contamination de la salle propre.

## Revendications

1. Ligne de production (12) pour la production de médicaments comprenant au moins un principe actif, la ligne de production (12) comportant une extrudeuse (20), pour la production d'un extrudat à partir du principe actif et d'au moins un excipient destiné à former une matrice d'encapsulation du principe actif, et un organe (24) de refroidissement de l'extrudat en sortie de l'extrudeuse (20), l'extrudeuse (20) comprenant un fourreau (30) et au moins deux vis (32) parallèles logées dans le fourreau (30) et s'interpénétrant l'une l'autre pour le mélange du ou de chaque principe actif avec le ou chaque excipient,
**caractérisée en ce que** le fourreau (30) est orienté sensiblement verticalement.

2. Ligne de production (12) selon la revendication 1, dans laquelle la surface au sol occupée par la ligne de production (12) est inférieure à 0,5 m².

3. Ligne de production (12) selon la revendication 1 ou 2, comprenant un terminal de commande (92) distant pour le pilotage de l'extrudeuse (20) et un dispositif de communication sans fil (94) pour l'échange de données entre l'extrudeuse (20) et le terminal de commande (92).

4. Ligne de production (12) selon l'une quelconque des revendications précédentes, dans laquelle l'organe de refroidissement (24) comporte une gaine (64) définissant un passage (66) pour l'extrudat et présentant au moins un canal (68) de guidage d'un fluide de refroidissement autour du passage (66).

5. Ligne de production (12) selon la revendication 4, dans laquelle l'organe de refroidissement (24) est disposé en-dessous du fourreau (30).

6. Ligne de production (12) selon la revendication 4 ou 5, dans laquelle le passage (66) est orienté sensiblement verticalement.

7. Ligne de production (12) selon l'une quelconque des revendications précédentes, comprenant un bâti (28) supportant l'extrudeuse (20) et un mécanisme de déplacement (70) pour le déplacement du fourreau (30) relativement au bâti (28) suivant une direction sensiblement verticale.

8. Ligne de production (12) selon l'une quelconque des revendications précédentes, dans laquelle chaque vis (32) est allongée suivant un axe propre, l'extrudeuse (20) comprend un dispositif d'entraînement (33) pour entraîner chaque vis (32) en rotation autour de son axe, et le dispositif d'entraînement (33) et chaque vis (32) comprennent des organes de coopération (49, 54) complémentaires pour la fixation réversible de chaque vis (32) au dispositif d'entraînement (33), lesdits organes de coopération (49, 54) étant adaptés pour empêcher, lorsque la vis (32) est fixée, la translation de ladite vis (32) suivant son axe relativement au fourreau (30).

9. Installation (10) de production de médicaments comprenant au moins un principe actif, ladite installation de production (10) comprenant une salle propre (14) dans laquelle sont produits les médicaments, **caractérisée en ce que** l'installation de production (10) comprend une ligne de production (12) selon l'une quelconque des revendications précédentes pour la production desdits médicaments, l'extrudeuse (20) étant placée dans la salle propre (14).

10. Installation de production (10) selon la revendication 9, comprenant un dispositif d'alimentation (16) pour l'alimentation de l'extrudeuse (20) avec un mélange pulvérulent comprenant le ou chaque principe actif et le ou chaque excipient, ledit dispositif d'alimentation (16) comprenant une ouverture (86) pour la réception du mélange pulvérulent placée hors de la salle propre (14).

11. Installation de production (10) selon la revendication 9 ou 10, comprenant un système de commande (18) pour le pilotage de la ligne de production (12), ledit système de commande (18) étant placé hors de la salle propre (14).

12. Procédé de production de médicament, dans lequel un médicament comprenant au moins un principe actif est produit au moyen d'une ligne de production selon l'une quelconque des revendications 1 à 8.

13. Procédé de production de médicament selon la revendication 12, comprenant l'alimentation de la ligne de production (12) avec un mélange pulvérulent comprenant le ou chaque principe actif, la fusion des composants du mélange pulvérulent dans l'extrudeuse (20), le mélange de ces composants sous l'action des vis (32), l'entraînement par les vis (32) de ces composants mélangés vers une sortie de l'extrudeuse (20), par laquelle ils sortent sous forme d'extrudat, et le refroidissement de l'extrudat au moyen de l'organe de refroidissement (24).

## Patentansprüche

1. Produktionslinie (12) für die Produktion von Medikamenten, die wenigstens einen Wirkstoff aufweisen, wobei die Produktionslinie (12) aufweist einen Extruder (20) für die Produktion eines Extrudats aus dem Wirkstoff und aus wenigstens einem Hilfsstoff, der dazu bestimmt ist, um eine Matrix zur Einkapselung des Wirkstoffs zu bilden, und ein Organ (24) zum Erkalten des Extrudats am Ausgang des Extruders (20), wobei der Extruder (20) eine Hülse (30) und wenigstens zwei parallele Schnecken (32), die in der Hülse (30) untergebracht sind und die ineinander greifen, aufweist für das Mischen des oder jedes Wirkstoffs mit dem oder jedem Hilfsstoff,
**dadurch gekennzeichnet, dass** die Hülse (30) im Wesentlichen vertikal ausgerichtet ist.

2. Produktionslinie (12) gemäß Anspruch 1, wobei die Bodenfläche, die von der Produktionslinie (12) eingenommen wird, kleiner als 0,5 m² ist.

3. Produktionslinie (12) gemäß Anspruch 1 oder 2, aufweisend ein entferntes Steuerterminal (92) für die Steuerung des Extruders (20) und eine Vorrichtung zur drahtlosen Kommunikation (94) für den Austausch von Daten zwischen dem Extruder (20) und dem Steuerterminal (92).

4. Produktionslinie (12) gemäß irgendeinem der vorhergehenden Ansprüche, wobei das Organ zum Erkalten (24) aufweist eine Hülle (64), die eine Passage (66) für das Extrudat definiert und die wenigstens einen Kanal (68) zum Führen eines Kühlfluid um die Passage (66) herum hat.

5. Produktionslinie (12) gemäß Anspruch 4, wobei das Organ zum Erkalten (24) unter der Hülse (30) angeordnet ist.

6. Produktionslinie (12) gemäß Anspruch 4 oder 5, wobei die Passage (66) im Wesentlichen vertikal ausgerichtet ist.

7. Produktionslinie (12) gemäß irgendeinem der vorhergehenden Ansprüche, aufweisend einen Unterbau (28), der den Extruder (20) trägt, und einen Verlagerungs-Mechanismus (70) zum Verlagern der Hülse (30) relativ zu dem Unterbau (28) entlang einer im Wesentlichen vertikalen Richtung.

8. Produktionslinie (12) gemäß irgendeinem der vorhergehenden Ansprüche, wobei jede Schnecke (32) entlang einer eigenen Achse langgestreckt ist, wobei der Extruder (20) eine Antriebsvorrichtung (33) aufweist zum Drehantreiben jeder Schnecke (32) um deren Achse, und wobei die Antriebsvorrichtung (33) und jede Schnecke (32) komplementäre Kooperationsorgane (49, 54) aufweisen für die reversible Befestigung jeder Schnecke (32) an der Antriebsvorrichtung (33), wobei die besagten Kooperationsorgane (49, 54) angepasst sind zum Verhindern, wenn die Schnecke (32) befestigt ist, der Translation der besagten Schnecke (32) entlang deren Achse relativ zu der Hülse (30).

9. Einrichtung (10) zur Produktion von Medikamenten, die wenigstens einen Wirkstoff aufweisen, wobei die Einrichtung zur Produktion (10) aufweist einen Reinraum (14), in welchem die Medikamente produziert werden, **dadurch gekennzeichnet, dass** die Einrichtung zur Produktion (10) eine Produktionslinie (12) gemäß irgendeinem der vorhergehenden Ansprüche für die Produktion der besagten Medikamente aufweist, wobei der Extruder (20) in dem Reinraum (14) angeordnet ist.

10. Einrichtung zur Produktion (10) gemäß Anspruch 9, aufweisend eine Versorgungsvorrichtung (16) für die Versorgung des Extruders (20) mit einer pulverförmigen Mischung, die den oder jeden Wirkstoff und den oder jeden Hilfsstoff aufweist, wobei die Versorgungsvorrichtung (16) eine Öffnung (86) aufweist für den Empfang der pulverförmigen Mischung, die außerhalb des Reinraums (14) angeordnet ist.

11. Einrichtung zur Produktion (10) gemäß Anspruch 9 oder 10, aufweisend ein Steuersystem (18) für die Steuerung der Produktionslinie (12), wobei das Steuersystem (18) außerhalb des Reinraums (14) angeordnet ist.

12. Verfahren zur Produktion eines Medikaments, wobei ein Medikament, das wenigstens einen Wirkstoff aufweist, produziert wird mittels einer Produktionslinie gemäß irgendeinem der Ansprüche 1 bis 8.

13. Verfahren zur Produktion eines Medikaments gemäß Anspruch 12, aufweisend das Versorgen der Produktionslinie (12) mit einer pulverförmigen Mischung, die den oder jeden Wirkstoff aufweist, das Fusionieren der Komponenten der pulverförmigen Mischung in dem Extruder (20), das Mischen dieser Komponenten unter der Wirkung der Schnecken (32), das Antreiben dieser gemischten Komponenten mittels der Schnecken (32) zu einem Ausgang des Extruders (20) hin, über welchen sie in Form eines Extrudats austreten, und das Erkalten des Extrudats mittels des Organs zum Erkalten (24).

## Claims

1. A production line (12) for the production of medicinal products comprising at least one active ingredient, the production line (12) comprising an extruder (20), for producing an extrudate from the active ingredient and at least one excipient intended to form an encapsulating matrix of the active ingredient, and a cooling member (24) for cooling the extrudate at the outlet of the extruder (20), the extruder (20) comprising a barrel (30) and at least two parallel screws (32) housed in the barrel (30) and interpenetrating with one another to mix the or each active ingredient with the or each excipient,
**characterized in that** the barrel (30) is oriented substantially vertically.

2. The production line (12) according to claim 1, wherein the footprint occupied by the production line (12) is less than 0.5 m².

3. The production line (12) according to claim 1 or 2, comprising a remote control terminal (92) for controlling the extruder (20) and a wireless communication device (94) for exchanging data between the extruder (20) and the control terminal (92).

4. The production line (12) according to any one of the preceding claims, wherein the cooling member (24) includes a sheath (64) defining a passage (66) for the extrudate and having at least one guide channel (68) for guiding a cooling fluid around the passage (66).

5. The production line (12) according to claim 4, wherein the cooling member (24) is positioned below the barrel (30).

6. The production line (12) according to claim 4 or 5, wherein the passage (66) is oriented substantially vertically.

7. The production line (12) according to any one of the preceding claims, comprising a frame (28) supporting the extruder (20) and a movement mechanism (70) to move the barrel (30) relative to the frame (28) along a substantially vertical direction.

8. The production line (12) according to any one of the preceding claims, wherein each screw (32) is elongated along a specific axis, the extruder (20) comprises a driving device (33) for rotating each screw (32) around its axis, and the driving device (33) and each screw (32) comprise complementary cooperating members (49, 54) for the reversible fastening of each screw (32) to the driving device (33), said cooperation members (49, 54) being suitable for preventing, when the screw (32) is fastened, the translation of said screw (32) along its axis relative to the barrel (30).

9. A production plant (10) for the production of medicinal products comprising at least one active ingredient, said production plant (10) comprising a clean room (14) in which the medicinal products are produced, **characterized in that** the production plant (10) comprises a production line (12) according to any one of the preceding claims for producing said medicinal products, the extruder (20) being placed in the clean room (14).

10. The production plant (10) according to claim 9, comprising a supply device (16) for supplying the extruder (20) with a powdered mixture comprising the or each active ingredient and the or each excipient, said supply device (16) comprising an opening (86) for receiving the powdered mixture placed outside the clean room (14).

11. The production plant (10) according to claim 9 or 10, comprising a control system (18) for controlling the production line (12), said control system (18) being placed outside the clean room (14).

12. A method for producing a medicinal product, wherein a medicinal product comprising at least one active ingredient is produced using a production line according to any one of claims 1 to 8.

13. The method for producing a medicinal product according to claim 12, comprising supplying the production line (12) with a powdered mixture comprising the or each active ingredient, melting the components of the powdered mixture in the extruder (20), mixing these components under the action of the screws (32), using the screws (32) to drive these mixed components toward an outlet of the extruder (20), through which they leave in the form of an extrudate, and cooling the extrudate using the cooling member (24).
